# EUROPEAN PATENT APPLICATION

(11) **EP 2 805 915 A1**
(43) Date of publication of application: **26.11.2014**
(21) Application number: 12866073.5
(22) Date of filing: 18.01.2012
(51) Int. Cl.: C01B 33/037

(54) **SILICON PURIFICATION APPARATUS AND SILICON PURIFICATION METHOD**

(71) Applicant: Silicio Ferrosolar, S.L.U., 28046 Madrid (ES)
(72) Inventor: DOHNOMAE Hitoshi, Tokyo 100-8071 (JP)
(74) Representative: Elzaburu S.L.P.
(86) International application number: PCT/JP2012/050899
(87) International publication number: WO 2013/108373

(57) **Abstract**

Provided are: a silicon purification apparatus that uses a ring-shaped thermal-insulating lid, which can be replaced while heating a crucible, as a thermal-insulating means for keeping the surface of a silicon melt at a high temperature, and has a simple structure and is easy to produce, said silicon purification apparatus being capable of continuously processing several tens of portions of charged silicon with the crucible heated as is; a silicon purification method that makes use of the silicon purification apparatus; and a purification method. The present invention pertains to a silicon purification apparatus, which is provided with, inside a depressurization chamber equipped with a vacuum pump, a graphite crucible having an opening at the upper end and accommodating silicon therein, and a heating device for heating said crucible, said silicon purification apparatus being characterized by being provided with a ring-shaped thermal-insulating lid that covers the opening of the crucible at the top of the crucible and has an exhaust opening with an area smaller than the surface of the silicon melt inside the crucible, said thermal-insulating lid being capable of being replaced during heating of the crucible in the decompression chamber. The present invention further pertains to a silicon purification method that makes use of the silicon purification apparatus.

## Description

### Technical Field

The present invention relates to a silicon purification apparatus for purifying high purity silicon that is employed for the manufacture of solar cells, etc. from inexpensive metal silicon materials with a high concentration of impurities, and a silicon purification method that is conducted with this silicon purification apparatus.

### Background Technology

To date the scrap silicon that is generated in the semiconductor manufacturing process has been used as the silicon materials for manufacturing solar cells. However, owing to the rapid growth in the demand for solar cells in recent years, the amount of scrap supplied has not kept up with demand, and there is concern about a shortage in the supply of silicon materials for manufacturing solar cells in the future. The silicon materials that are being used in the semiconductor manufacturing process are being manufactured by the Siemens method, but silicon raw materials that are manufactured by the Siemens method are expensive, and they are unsuitable in terms of cost in the route in which they are directly supplied to the solar cell manufacturing process. Accordingly, efforts are being made to develop of a metallurgic process for manufacturing high purity silicon from inexpensive metal silicon materials that have a high concentration of impurities with vacuum melting or solidification refining.

The above-mentioned metallurgic process is a process for refining by combining several metallurgic sub-processes that utilize the differences in the physical behavior between impurity elements and silicon. The application of vacuum melting has been examined for the sub-process for eliminating impurity elements whose vapor pressure is higher than Si (silicon), of which P (phosphorous) is a representative. Below, the expression "P elimination" by vacuum melting is employed, but according to this vacuum melting method, impurity elements whose vapor pressure is higher than Si (silicon) other than P are eliminated along with P elimination.

As the basic constitution of the apparatus that is employed in vacuum melting, a heating apparatus such as a crucible or heater is installed in a decompressable vacuum chamber that has a vacuum pump. The metal silicon raw material containing several tens ppm of P or above is filled into the crucible, and then it is heated and melted under decompression or under inert gas, and this silicon melt that is produced by melting is maintained for a fixed time under decompression and at a temperature above the melting point. During this time, the P with a higher vapor pressure than Si is evaporated with priority from the silicon melt, so the P concentration in the Si declines along with time.

The present inventors first of all proposed a low cost silicon purification apparatus and silicon purification method with a simple, convenient and inexpensive constitution, which can lower the vapor pressure of the impurities above the silicon melt surface, and thereby realize adequate P reduction rate, by condensing and eliminating to the maximum extent possible the impurities that have evaporated from the above-mentioned silicon melt surface by an impurity condensation apparatus, with a silicon purification apparatus that is constituted by installing a crucible accommodating the silicon and a heating apparatus for heating said crucible inside a decompression chamber that is equipped with a vacuum pump, wherein an impurity condensation apparatus is disposed at a position at which it is possible to view one or both of the silicon melt surface or crucible opening part inside said crucible (Patent Document 1). However, it is necessary to use a crucible made of graphite in order to withstand use in a vacuum as the crucible for maintaining the silicon melt that is proposed in Patent Document 1, but if a crucible made of graphite is used the carbon, which is the crucible material, melts in the silicon melt, a portion of this melted carbon floats on the melt surface as SiC (silicon carbide), and these floating SiC particles may impede physically the evaporation of P from the silicon melt and cause the P elimination efficiency to decline, and cause the productivity of the P elimination treatment to decline.

Accordingly, the present inventors next proposed a silicon purification apparatus wherein there is disposed on the upper surface of the crucible a thermal-insulating ring or a disk whose outer diameter is smaller that the inner diameter of the crucible, or a heater for heating, or a thermal-insulating ring or a disk whose outer diameter is smaller that the inner diameter of the crucible and a heater for heating, and that can inhibit the floating of the SiC particles to the silicon melt surface and achieve a large P elimination rate, and a silicon purification method that employs the above-mentioned silicon purification apparatus, as things that solve the problems that arise when the graphite crucible that was clarified in Patent Document 1 is employed, that is, the problem that SiC particles float on the silicon melt surface and cause the productivity of the P elimination process to decline (Patent Document 2).

According to the invention in Patent Document 2, when the process for P elimination by vacuum melting is put into practical use, it was learned that the temperature of the silicon melt surface can be maintained at a high temperature, and the following two effects can be obtained. The first is that there is the effect of promoting process of P elimination employing vacuum melting (b), the rate-limiting process, among the three elementary processes (a) the process of diffusing P inside the silicon melt, (b) the process of evaporation of P from the free surface of the silicon melt, and (c) the process of diffusing P in the gas phase, and increasing the P elimination rate. In addition, the second is that there is the effect of inhibiting the occurrence of floating matter that impedes the evaporation of P from the silicon melt surface, and maintaining the P elimination rate. Owing to this, in the event that a graphite crucible of general-purpose materials that is cost-effective is employed as the crucible that is employed for P elimination that employs vacuum melting, C (carbon) from that graphite crucible melts in a concentration of several tens to several hundreds of ppm in the silicon melt, and this melted C is deposited and floats on the silicon melt surface as SiC particles, and impedes the evaporation of P from the silicon melt surface, but it is possible to inhibit the deposit of SiC particles to the silicon melt surface by maintaining the temperature of the silicon melt surface at a high temperature. Actually, the present inventors put into practical use and studied various types of items like those shown in Patent Document 2 as the thermal insulation means for maintaining the surface of the silicon at a high temperature, but all of these exhibited the two above-mentioned effects, and exhibited an adequate function as items that improve productivity.

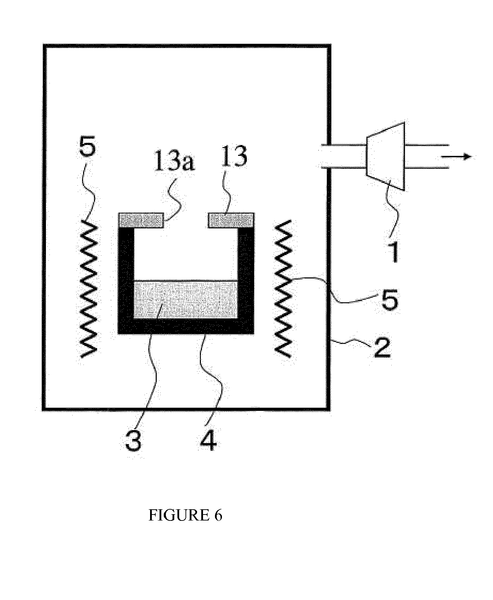

On the other hand, as a result the present inventors' pursuit of further study about a silicon purification apparatus that is equipped with a ring-shaped thermal-insulating member made of graphitized felt (graphite felt) as an easy to produce thermal insulation means with the most simple and convenient structure for maintaining the silicon melt surface at a high temperature, they learned that there exist separate new problems like the following. As shown in Figure 6, this silicon purification apparatus is equipped with a graphite crucible 4 with an upper end opening for accommodating the silicon melt 3, and a heating apparatus 5 for heating said crucible 4, inside a decompression chamber 2 equipped with a vacuum pump 1, and is positioned at the upper part of the above-mentioned crucible 4 and covers the opening of this crucible 4, and in addition it is equipped with a ring-shaped thermal-insulating member 13 that has an exhaust opening 13a for exhausting the impurity vapor that evaporates from the silicon melt 3 surface, in the middle of the route from the silicon melt 3 surface to the impurity condensation apparatus, which is not illustrated. Then, when it comes to the opening edge of this exhaust opening 13a, since the temperature is substantially lower than that of the silicon melt 3, this means that the impurity vapor that evaporates from the silicon melt 3 surface condenses in a fixed proportion, and if this condensed impurity vapor is a liquid phase, and it has a structure whereby this is refluxed into the crucible, it is possible to keep the exhaust opening 13a open continuously.

However, while the process of P elimination by vacuum melting is a process that eliminates P by evaporating if from the silicon melt 3 surface, there is a fixed vapor pressure for Si as well and unavoidably Si also evaporates at the same time. Moreover, no matter how much smaller the vapor pressure of Si is compared to the vapor pressure of P, given the fact that the purpose is to lower adequately the concentration of P in Si, the concentration of Si that is present at the silicon melt 3 surface is overwhelmingly larger than the concentration if P, and when it comes to the element amounts that evaporate from the silicon melt 3 surface, that is, the element amounts that pass through the exhaust opening 13a of the ring-shaped thermal-insulating member 13 and move towards the above-mentioned impurity condensation apparatus, Si is overwhelming greater than P.

Owing to this, it was learned that the solids of Si and Si compounds are gradually deposited on the opening edge of the exhaust opening 13a of the ring-shaped thermal-insulating member 13, and in P elimination treatment of several charges' worth of silicon, the amount of these deposited does not greatly reduce the exhaust opening 13a, but during the P elimination treatment of several tens of charges' worth of silicon with the crucible 4 in a heated state, the amount increases to the point where the exhaust opening 13a is blocked, and by extension the evaporation of P and Si are impeded and the P elimination efficiency declines. In addition, it was learned that in order to prevent this depositing of the solids of Si and Si compounds, it is necessary to maintain the temperature in the vicinity around the exhaust opening 13a of the ring-shaped thermal-insulating member 13 at a high temperature to the same extent as the silicon melt 3 surface, but in the constitution of the ring-shaped thermal-insulating member 13 with only insulation that is not equipped with a heating apparatus, it is difficult to maintain the temperature in the vicinity around this exhaust opening 13a at a high temperature to the same extent as the silicon melt 3 surface, and it is difficult in principle to inhibit the depositing of the solids of Si and Si compounds to an adequate extent.

### Prior Art Documents

### Patent Documents

Patent Document 1: Japanese Unexamined Public Patent Bulletin No. 2005-231,956
Patent Document 2: Japanese Unexamined Public Patent Bulletin No. 2006-232,658

### Overview of the Invention

### Problems That the Invention Attempts to Solve

Accordingly, as a result of the in-depth study undertaken by the present inventors to solve the new problems in the above-described ring-shaped thermal-insulation member pertaining to Patent Document 2, that is, the problem that it is difficult to conduct P elimination treatment continuously with the crucible in a heated state for several tens of charges' worth of silicon, they discovered that the problems can be solved by constituting this ring-shaped thermal-insulation member as a ring-shaped heat-insulating lid that can be replaced during the heating of a crucible, and they thereby completed the present invention.

Therefore, the purpose of the present invention is to provide a silicon purification apparatus, which employs a ring-shaped heat-insulating lid whose structure is simple and convenient and whose manufacture is easy, and that in addition can be replaced during the heating of a crucible, as the thermal insulation means for maintaining the silicon melt surface at a high temperature, and which enables the continuous treatment of several tens of charges' worth of silicon with the crucible in a heated state, and the silicon purification method that employs this apparatus.

### Means for Solving the Problems

The present invention is something that was created in order to solve the above-mentioned problems, and is constituted as follows.
(1) A silicon purification apparatus that is equipped with a graphite crucible at the upper end opening for accommodating the silicon and a heating apparatus for heating said crucible inside a decompression chamber that is equipped with a vacuum pump, wherein said apparatus is equipped with a ring-shaped thermal-insulating lid that covers the opening of said crucible at the upper part of the above-mentioned crucible, and that in addition has an exhaust opening whose area is smaller than the silicon melt surface inside the crucible, and said heat-insulating lid can be replaced during the heating of the above-mentioned crucible inside the above-mentioned decompression chamber.
(2) The silicon purification apparatus described in (1) above, wherein the above-mentioned ring-shaped thermal-insulating lid covers the peripheral portion of the opening of said crucible, in the upper part of the above-mentioned crucible, and in addition covers the opening of said crucible, through a ring-shaped peripheral heat-insulating member that has a central opening with an area smaller than the silicon melt surface inside the crucible.
(3) The silicon purification apparatus described in (1) or (2) above, wherein the above-mentioned decompression chamber is equipped with a preparation chamber that accommodates a replaceable thermal-insulating lid through a gate valve.
(4) A silicon purification method that employs the silicon purification apparatus described in any one of (1) to (3) above, and that eliminates the impurities that evaporates from within the silicon melt while heating the silicon in the crucible to the melting point or above, wherein at least 2 charges of silicon purification treatment are conducted while the heating of the crucible is continued, by exchanging at least one time the replaceable thermal-insulating lid.
(5) The silicon purification method described in (4) above, wherein the pressure inside the decompression chamber during the above-mentioned silicon purification treatment is ≤ 500 Pa.
(6) The silicon purification method described in (4) or (5) above, wherein the pressure inside the decompression chamber during the replacement of the above-mentioned replaceable thermal-insulating lid is greater than 500 Pa.

### Effects of the Invention

According to the present invention, since a silicon purification apparatus employs a ring-shaped heat-insulating lid whose structure is simple and convenient and whose manufacture is easy, and that in addition can be replaced during the heating of a crucible, as the thermal insulation means for maintaining the silicon melt surface at a high temperature, it enables the continuous treatment of several tens of charges' worth of silicon with the crucible in a heated state, and thus a reduction of the time-related and heat energy-related costs that are required for the re-heating of the crucible becomes possible, and it is possible to supply inexpensive and highly pure silicon raw materials for solar cells.

### Brief Description of the Figures

[Figure 1] Figure 1 is a conceptual explanatory figure for explaining the silicon purification apparatus pertaining to the first mode of embodiment of the present invention.
[Figure 2] Figure 2 is a conceptual explanatory figure that shows the existence area of the Si that flies out from the silicon melt surface in Figure 1 through the exhaust opening of the thermal-insulating lid.
[Figure 3] Figure 3 is a conceptual explanatory figure that shows the area in which the effects of cold radiation from the cooled space above the thermal-insulating lid in Figure 1.
[Figure 4] Figure 4 is a conceptual explanatory figure for explaining the silicon purification apparatus pertaining to the second mode of embodiment of the present invention.
[Figure 5(a)] Figure 5(a) is a conceptual explanatory figure for explaining one example of the silicon purification method for replacing the thermal-insulating during the heating of the crucible, and conducting P elimination treatment continuously, with the inventive silicon purification apparatus.
[Figure 5(b)] Like Figure 5(a), Figure 5(b) is a conceptual explanatory figure for explaining one example of the silicon purification method, and it shows a state in which the thermal-insulating lid is housed inside the preparation chamber.
[Figure 6] Figure 6 is a conceptual explanatory figure for explaining the silicon purification apparatus that is equipped with a ring-shaped thermal-insulating member pertaining to the invention of Patent Document 2.

### Mode for Embodying the Invention

The present invention is a silicon purification apparatus that is equipped with a graphite crucible with an upper end opening, and a heating apparatus for heating this crucible, inside a decompression chamber equipped with a vacuum pump, and a purification method that is conducted with this silicon purification apparatus. Here, purification as referred to in the present invention chiefly means the elimination of P, and in addition to P the elimination of impurity elements whose vapor pressure is higher than Si, such as Al, As, Sb, Li, Mg, Zn, Na, Ca, Ni, Ge, Cu, Sn, Ag, In, Mn, Pb, Tl, etc. are included.

### (First Mode of Embodiment)

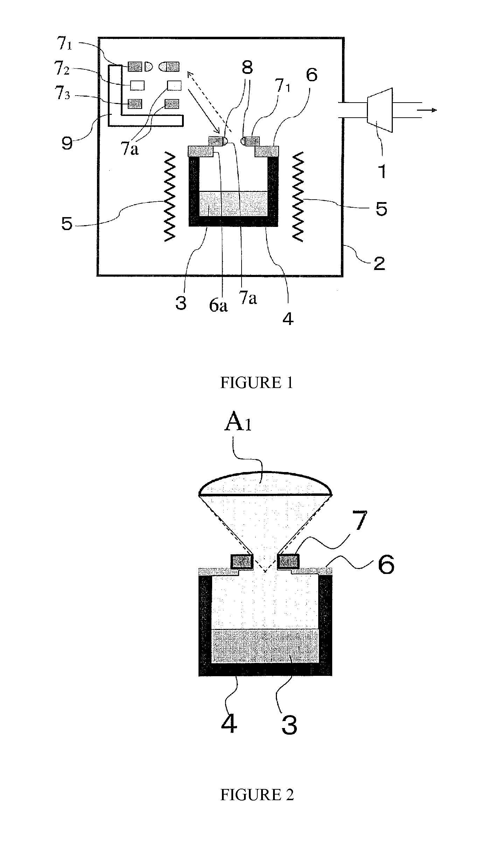

An explanation of the constitution of the silicon purification apparatus for the first mode of embodiment of the present invention is provided below based on Figure 1. First of all, a crucible 4 for holding in place the silicon melt 3 and a heating apparatus 5 for keeping the silicon in a liquid phase state have been set inside the decompressable decompression chamber 2, which is equipped with a vacuum pump 1. Then, on the upper part of the crucible 4, a ring-shaped peripheral thermal-insulating member 6 that covers the peripheral portion of the opening of the crucible and moreover has a central opening 6a with an place that is smaller than the place of the silicon melt 3 surface inside the crucible 4 has been installed, and in addition on the upper part of this peripheral thermal-insulating member 6, a first ring-shaped thermal-insulating lid 7₁ that covers the above-mentioned central opening 6a of the crucible 4 and moreover has an exhaust opening 7a with an place that is smaller than the place of the silicon melt 3 surface inside the crucible 4 has been provided at a position that covers the central opening 6a thereof, and in addition inside the above-mentioned pressurization chamber 2, a second and a third ring-shaped thermal-insulating lid 7₂, 7₃ with the same shape and size of the above-mentioned ring-shaped thermal-insulating lid 7₁ have been disposed at the storage place 9 thereof. In addition, it is configured in such a manner that these first to third ring-shaped thermal-insulating lids 7₁ - 7₃ (these are collectively indicated by "7") can be moved and replaced at any time, without relying on the pressured inside the decompression chamber 2 and the state of the silicon melt 3, in the space between that storage place 9 and the position that covers the central opening 6a thereof (that is, the use place) at the upper part of the above-mentioned peripheral thermal-insulating member 6.

It is acceptable if vacuum pump 1 can decompress to ≤ 500 Pa, or it is adequate with just an oil sealed rotary pump, but it is also acceptable to equip it with a mechanical booster pump in accordance with the size of the decompression chamber 2, and if an oil sealed diffusion pump or turbo molecular pump is furnished, it also becomes possible to shorten further the vacuum sweeping time or P (phosphorous) elimination time.

As for the graphite crucible 4, it is optimal that it be made of high density graphite with which no gas reacting with silicon is generated. Since a quartz crucible reacts with silicon under a high vacuum and generates SiO (silicon monoxide) gas, there is the problem that it is not possible to maintain the inside of the decompression chamber 2 under a high vacuum, or that the silicon melt 3 boils explosively due to the gas that wells up, and it is not suitable as a crucible for silicon purification by vacuum melting.

Any heating apparatus 5 at all can be applied provided that it can heat to the melting point of silicon or above, but a heater heating system that impresses voltage on a heating element made of graphite, etc., and heats the crucible 4 and silicon melt 3 by joule heat generation is simplest and most convenient. In addition, an induction heating system that disposes an induction coil on the outside of the graphite crucible 4, makes the graphite crucible generate heat by an induction electric current, and heats the silicon melt 3 by means of this heat-generating graphite crucible can also be applied optimally. Either of these heating apparatuses is a simple and convenient heating system for the metal melting that is widely utilized in general.

In addition, in the event that several tens of charges' worth of silicon is subjected to purification treatment continuously, a melt discharge mechanism that discharges to the outside of the pressurization chamber 2 the silicon melt 3 after purification treatment with this graphite crucible 4 in a state in which the graphite crucible has been heated is required as the constitution, which is not illustrated in the figures. As this melt discharge mechanism, a mechanism that is constituted as follows can be cited as an example as one preferred mode of embodiment: A pressurizable melt receiving chamber is provided in parallel through a gate on the decompression chamber 2, a melt receptacle that receives the silicon melt 3 is disposed inside this melt receiving chamber, and in addition a discharge port for the silicon melt 3 is provided on the upper part of the graphite crucible 4, and in addition the pressurization chamber is constituted in such a manner that it can incline together with the graphite crucible 4, and when the silicon melt 3 is discharged, the melt receiving chamber is decompressed to the same pressure as the inside of the decompression chamber 2, after which the decompression chamber 2 along with the graphite crucible 4 are inclined and the silicon melt 3 is discharged to the melt receptacle inside the melt receiving chamber from the discharge port at the upper part of the graphite crucible 4. In addition, similarly as another preferred mode of embodiment, the following mechanism can be cited as an example: a valve that can be opened and closed is furnished on the bottom of the graphite crucible 4, and in addition a pressurizable melt receiving chamber is disposed through a gate beneath the graphite crucible 4, and a melt receptable that receives the silicon melt 3 is disposed inside this melt receiving chamber. In either of these modes of embodiment, it is necessary that the melt receptable that receives the silicon melt 3 is disposed inside a decompressable melt receiving chamber, and that the pressurization chamber 2 in which the above-mentioned graphic crucible 4 is disposed and the melt receiving chamber in which the above-mentioned melt receptacle is disposed can both be in communication under reduced pressure, and the silicon melt 3 for which the P elimination treatment is already completed by this is sent from the graphite crucible 4 to the inside of the melt receptacle within being exposed to the atmosphere, after which the melt receiving chamber can be separated from the above-mentioned decompression chamber, and the silicon melt 3 for which the purification treatment is completed can be removed.

Here, at the upper part of the graphite crucible 4, a ring-shaped peripheral thermal-insulating member 6 that covers the peripheral portion of the opening of the crucible 4, and that moreover has a central opening 6a with an place that is smaller than the place of the silicon melt 3 surface inside the crucible 4, or the first to third ring-shaped thermal-insulating lids 7 that cover the opening of the above-mentioned graphite crucible 4 through this peripheral thermal-insulated member 6, and that in addition have an exhaust opening 7a whose area is smaller than the silicon melt 3 surface inside the crucible 4, are basically formed by an insulation material such as graphite felt, but since the felt-like material readily absorbs the vapor of the silicon, and has a tendency to react with the vapor of the silicon and deteriorate, it is preferable that it have a structure in which the outer skin, and particular the lower surface side that faces the silicon melt 3 surface, and the inner peripheral surface side of the central opening 6a or exhaust opening 7a, be covered with a fine graphite member in such a manner that the vapor is not absorbed.

In addition, there are no restrictions on the shape or size of this ring-shaped peripheral thermal-insulating member 6 or these first to third ring-shaped thermal-insulating lids 7 provided that basically the peripheral thermal-insulating member 6 can cover the opening of the graphite crucible 4, and the thermal-insulating lids 7 can cover the central opening 6a of the peripheral thermal-insulating member 6, respectively, but as concerns the thermal-insulating lids 7, in order to maintain the temperature of the silicon melt 3 surface at a high temperature, and to ensure an exhaust route for the impurity elements with good efficiency, the area of the exhaust opening 7a thereof should be ≥ 1% and ≤ 70%, and preferably be ≥ 1% and ≤ 50%, and more preferably be ≥ 3% and ≤ 20%, and in addition if we take into consideration the ease of the replacement operation between the thermal-insulating lid 7₁ after it has been used for the silicon purification treatment and the still unused thermal-insulating lid 7₂, the area of the overall plane thereof (including the exhaust opening 7a) should be ≥ 5% and ≤ 80%, and preferably be ≥ 5% and ≤ 30%, of the silicon melt 3 surface. The shape and size of the central opening 6a of the peripheral thermal-insulating member 6 is determined based on the shape and size of the graphite crucible 4 and the thermal-insulating lids 7. The number of thermal-insulating lids 7 is not limited to the three shown in Figure 1, and it may be one or two or it may be four or more in accordance with the number of charges of silicon that undergo purification treatment continuously with the silicon purification apparatus, and preferably it should be several (two or more) of these.

According to the silicon purification apparatus pertaining to the mode of embodiment shown in this Figure 1, three thermal-insulating lids 7 have been provided in the inside of this decompression chamber 2, and in addition the apparatus is constituted in such a manner that these thermal-insulating lids 7 can move freely between the storage place 9 and the use place (the position that covers the central opening 6a at the upper part of the peripheral thermal-insulating member 6) thereof even during the heating of the graphite crucible 4, so when the solids of Si and Si compounds adhere to the opening edge of the exhaust opening 7a thereof in the thermal-insulating lid 7₁, and the exhaust opening 7a is blocked to the extent that it impedes the P elimination treatment, new P elimination treatment can be conducted further while maintaining the heated state of the graphite crucible 4 by replacing this thermal-insulating lid 7₁ after use with the thermal-insulating lid 7₂, prior to use.

There are no particular restrictions on the movement means for moving the thermal-insulating lids 7 between the storage place 9 and the use place thereof, and for example, it may be constituted in such a manner that a rotating shaft (not illustrated in the figures) may be attached to each thermal-insulating lid 7 through an arm as needed, and in addition each thermal-insulating lid 7 to which this rotating shaft is attached is disposed at a peripheral position of the graphite crucible 4 inside the decompression chamber 2, and the rotating shaft is rotated and is moved in the horizontal direction between the storage place (storage position) 9 and the use place (use position) thereof, and in this case it is possible to replace the thermal-insulating lids 7 twice if three thermal-insulating lids 7 are disposed at the peripheral position of the graphite crucible 4.

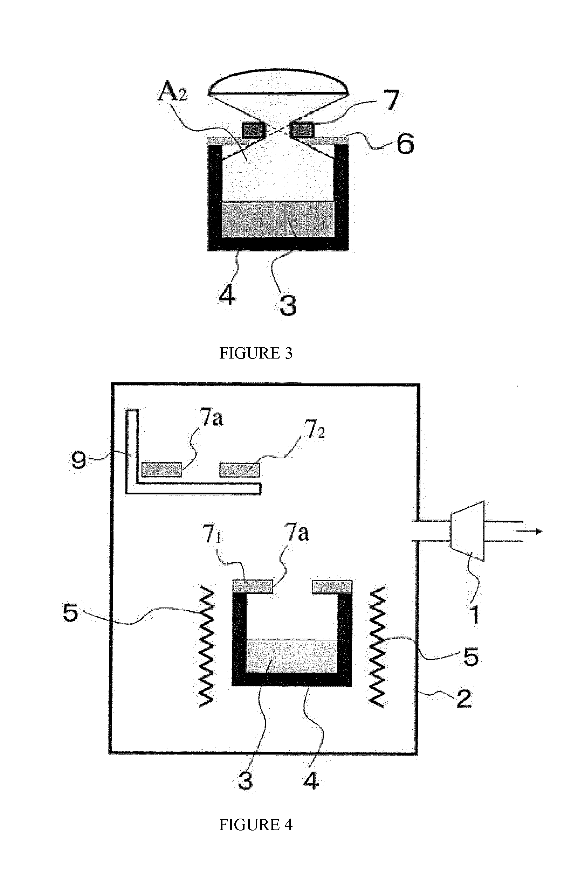

Here, the inner peripheral part (opening edge part) that forms the exhaust opening 7a of the thermal-insulating lid 7 is the site with the lowest temperature at a place reached by the vapor of the Si and Si compounds, and the solids 8 of Si and Si compounds deposit at this portion and the growth thereof progresses, but a detailed explanation of this point is provided below with reference to Figure 2 and Figure 3.

According to the treatment conditions of the present invention, since the degree of vacuum is sufficiently high, the Si that is evaporated forms a molecule flow, and moves rectilinearly, but since it flies out mainly from the free surface of the silicon melt 3, the majority of the Si is present in area A₁ shown by the dotted line in Figure 2. On the other hand, the area above the thermal-insulating lid 7 is a space with a far lower temperature than the temperature of the silicon melt 3, and the radiative cooling from that space is extremely large, but the strongly cooled area that anticipates that space is area A₂ shown by the dotted line in Figure 3. In Figure 2, of the Si that is evaporated from the free surface of the silicon melt 3, the Si that has moved upwards from the thermal-insulating lid 7 reaches the impurity condensation apparatus (not illustrated in the figures), but since the impurity condensation apparatus has been cooled to below the melting point of Si, it solidifies as a film of Si, and P is taken into it, and owing to this P is condensed on the Si film. Next, the lower surface of the peripheral thermal-insulating member 6 or thermal-insulating lid 7 receives strong heat radiation from the silicon melt 3, and in addition it is separated from the strongly cooled area A₂ in Figure 3, and since a high temperature is maintained, the Si that reaches the lower surface of the peripheral thermal-insulating member 6 or thermal-insulating lid 7 is re-evaporated, and condensed as a liquid phase, after which it is refluxed to the silicon melt 3. However, since the inner peripheral part (opening edge part) of the thermal-insulating lid 7 is included in the strongly cooled area A₂, and it is not possible to maintain as high a temperature as the lower surface of the peripheral thermal-insulating member 6 or thermal-insulating lid 7, solids of Si or Si compounds that derive from the flying Si are formed. Accordingly, it has a constitution in which the thermal-insulating lid 7 can be replaced beforehand, and if replacement and cleaning are repeated, it is possible to conduct P elimination treatment continuously without this resulting in a decline in the P elimination rate.

### (Second Mode of Embodiment)

A description is provided based on Figure 4 of the constitution of the silicon purification apparatus pertaining to the second mode of embodiment of the present invention. This silicon purification apparatus differs from the first mode of embodiment shown in Figure 1, and at the upper part of the graphite crucible 4 is equipped with a plurality of ring-shaped lids 7 (7₁, 7₂) that cover the opening this crucible 4, and that in addition have an exhaust openings 7a with an area that is smaller than the silicon melt 3 surface inside the crucible 4.

Even in the case of this second mode of embodiment, other than the fact that the ring-shaped thermal-insulating member 6 is not employed, the rest of the constitution is the same as the case of the first mode of embodiment, and particularly in those cases where the graphite crucible 4 is relatively small, the apparatus constitution is more streamlined and useful.

### (Third Mode of Embodiment)

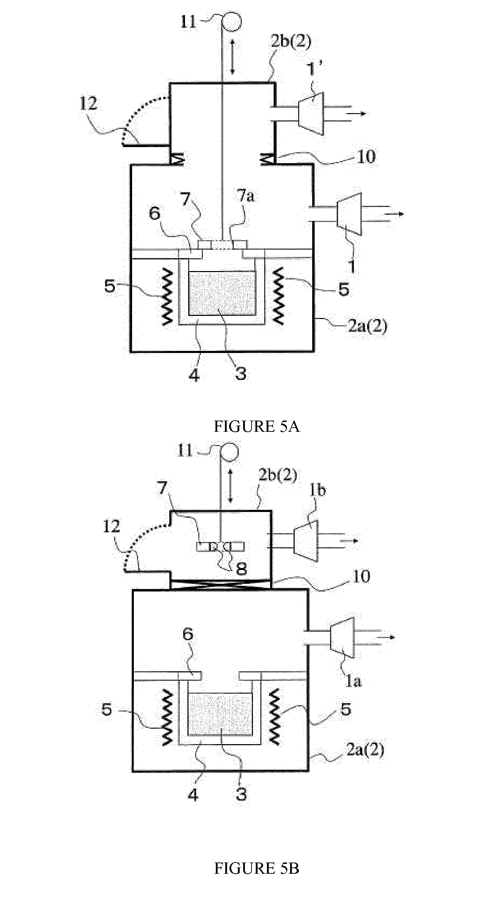

A description is provided based on Figure 5(a) and Figure 5(b) of the constitution of the silicon purification apparatus pertaining to the third mode of embodiment of the present invention. In this third mode of embodiment, the decompressable decompression chamber 2 is composed of a treatment chamber 2a and a spare exhaust chamber 2b, and this treatment chamber 2a and spare exhaust chamber 2b are partitioned in such a manner that they can be opened and closed by a gate valve 10. The treatment chamber 2a and a spare exhaust chamber 2b are provided with vacuum pumps 1a, 1b respectively, and it is possible to change freely the internal atmospheric pressure state of spare exhaust chamber 2b from atmospheric pressure to reduced pressure, and from reduced pressure to atmospheric pressure, without breaking the vacuum of the treatment chamber 2a. The above-mentioned thermal-insulating lid 7 straddles the position of the gate valve 10, and is equipped with a lifting apparatus 11 that moves between the treatment chamber 2a and the spare exhaust chamber 2b. In addition, the spare exhaust chamber 2b cleans the thermal-insulating lid 7, or alternatively is equipped with a door 12 that is opened and closed when it is replaced.

Figure 5(a) shows the state during set up on the peripheral thermal-insulating member 6 for the purpose of using the thermal-insulating lid 7, and the thermal-insulating lid 7 is located inside the treatment chamber 2a. In addition, Figure 5(b) shows a state in which the thermal-insulating lid 7 after use to which solids of Si and Si compounds (not illustrated in the figure, see Figure 1) have adhered to the exhaust opening 7a to the extent that the P elimination treatment is impeded is stored inside the spare exhaust chamber 2b. Since the gate valve 10 is closed, the door 12 of the spare exhaust chamber 2b can be opened and the thermal-insulating lid 7 after use can be cleaned, with the crucible 4 in a heated state, or alternatively the solids can be removed from the exhaust opening 7a of the thermal-insulating lid 7 by replacing it with a thermal-insulating lid 7 prior to use.

According to the silicon purification apparatus pertaining to the third mode of embodiment, in principle even if the exhaust opening 7a of the thermal-insulating lid 7 is blocked to the extent that the P elimination treatment is impeded, it is possible to implement the P elimination treatment continuously while maintaining the heated state of the crucible 4 by cleaning or replacing the thermal-insulating lid 7. In the first mode of embodiment, the amount of the charge (the number of charges) that can be purified was subject to restrictions due to the number of thermal-insulating lids 7 that are furnished beforehand inside the decompressable decompression chamber 2, but it is not subject to such restrictions in this mode.

### (Fourth Mode of Embodiment)

The fourth mode of embodiment of the present invention is a silicon purification method that employs the above-mentioned first to third modes of embodiment, heats silicon to its melting point or above, and maintains its molten state.

In the conventional method, an apparatus with a constitution like that shown in Figure 6 is employed, but at the stage at which several charges of silicon have undergone P elimination treatment, the silicon that has adhered to the inner peripheral part of the exhaust opening 13a of the ring-shaped thermal-insulating member 13 blocks this exhaust opening 13a and impedes the evaporation of P and Si, and this lowers the P elimination rate, and moreover it is no longer possible to continue the P elimination treatment. However, by employing the apparatus in the above-mentioned first to third modes of embodiment, and by replacing the thermal-insulating lid 7 with a spare thermal-insulating lid 7 or by removing the blocked thermal-insulating lid 7 to the spare chamber and replacing or cleaning it, at the stage at which the exhaust opening 7a of the thermal-insulating lid 7 is blocked, it is possible to conduct P elimination treatment continuously for several tens of charges' worth of silicon while continuing the heating of the crucible 4.

### (Fifth Mode of Embodiment)

The fifth mode of embodiment of the present invention is the silicon purification method in the above-mentioned fourth mode of embodiment, and is a silicon purification method that decompresses the inside of the decompression chamber 2 to ≤ 500 Pa and preferably to ≤ 10 Pa, heats silicon to its melting point or above, and maintains its molten state.

By decompressing the inside of the decompression chamber 2 to ≤ 500 Pa, the P elimination rate becomes larger and the productivity of silicon purification is improved, and in addition by decompressing it to ≤ 10 Pa, an even larger P elimination rate and improvement of the productivity of silicon purification are obtained.

### (Sixth Mode of Embodiment)

The sixth mode of embodiment of the present invention is the silicon purification method in the above-mentioned fourth and fifth modes of embodiment, and is a silicon purification method wherein the thermal-insulating lid 7 is replaced or cleaned, and the pressure inside the decompression chamber 2 is set higher than 500 Pa.

When the pressure inside the decompression chamber 2 is set higher than 500 Pa, the evaporation of Si from the silicon melt 3 surface is inhibited, so it is possible to replace or clean the thermal-insulating lid 7 while maintaining such a state, and the adherence of the solids of Si and Si compounds to the thermal-insulating lid 7 during the replacement or cleaning of this thermal-insulating lid 7 is prevented, and the soiling of the surface of the thermal-insulating lid 7 and the impeding of the continuation of continuous silicon purification treatment are prevented.

The pressure inside the decompression chamber 2 during the replacement or cleaning of this thermal-insulating lid 7 is preferably a pressure of ≥ 2,000 Pa, but an unduly high pressure requires time and a large amount of inert gas for the recovery of the pressure from the pressure of ≤ 10 Pa, which is optimal for P elimination treatment, and is disadvantageous in terms of productivity and cost, so it should be a pressure of ≤ 10,000 Pa.

### Embodiments

### (Embodiment 1 and Comparative Example)

First of all, a description of a summary of the silicon purification apparatus used in this Embodiment 1 and Comparative Example is provided. The basic structure is in conformity with Figure 1. The decompressable decompression chamber 2 has a water cooled jacket structure, and is equipped with a two-stage vacuum pump, oil sealed rotary pump → mechanical booster pump. A crucible made of high purity graphite with an outer diameter of 1,000 mm, an inner diameter of 900 mm and a depth (internal dimensions) of 500 mm, a heater made of high purity graphite at a position that covers the side surface and bottom surface of the crucible and insulating material made of carbon on the outer walls of these are installed inside the decompressable decompression chamber. It is possible to input a maximum power of 300 kW for the graphite heater.

As the means for thermally insulating the silicon melt surface, a ring-shaped peripheral thermal-insulating member with an outer diameter of 600 mm and an inner diameter of 400 mm was provided on the upper part of the crucible, and a ring-shaped thermal-insulating lid with an outer diameter of 500 mm and an inner diameter of 340 mm was provided replaceably on this peripheral thermal-insulating member. However, this peripheral thermal-insulating member and thermal-insulating lid employ high density graphite and graphite felt, and have a 2-layer structure in which the lower surface of graphite felt, which forms the ring-shaped main unit, and the inner peripheral surface side of the central opening or exhaust opening are covered by high density graphite with a thickness of 5 mm. In addition, in the present embodiment, three thermal-insulating lids have been furnished beforehand inside the decompression chamber, and it is possible to replace the thermal-insulating lid at any time in the event that the exhaust opening of the thermal-insulating lid is blocked.

In the present embodiment, P elimination treatment of 15 charges were implemented continuously while the heating of the crucible was continued, but two mechanisms that are described below (not illustrated in the figures) have been employed. The first is a mechanism for charging the raw materials, and this is a mechanism that charges 500 kg of raw materials from the opening of the crucible without exposing to air the atmosphere inside the decompression chamber.
The second is a mechanism that discharges the silicon melt whose P elimination treatment is finished, and in this embodiment, it is configured in such a manner that it is equipped with a mechanism whereby the decompression chamber is inclined together with the graphite crucible, and in addition the discharge port of the silicon melt is provided on the upper part of the graphite crucible, and in addition a decompressable decompression chamber in which a melt receiving receptable is disposed is furnished in vicinity to the decompression chamber in which the crucible is disposed, and the decompression chamber in which the above-mentioned crucible is disposed and the decompression chamber in which the above-mentioned melt receiving receptacle is disposed are in communication under reduced pressure, and owing to this it is possible to send this silicon melt from the crucible to the melt receiving receptacle without exposing the silicon melt whose P elimination treatment is finished to the air, after which it is possible to separate the above-mentioned two decompression chambers, and to remove the treated silicon.

As the pre-preparation of P elimination treatment, first of all, the inside of the decompression chamber in which the crucible is disposed was decompressed to 3,000 Pa after argon gas was substituted, and then the crucible was heated to 1,600 °C, in a state in which this argon gas atmosphere at 3,000 Pa was maintained, and the crucible was kept at 1,600 °C during the silicon purification treatment.

In the present embodiment, 15 charges of the cycle of P elimination treatment, which is described below, were implemented continuously. For the treatment of 1 cycle, first of all, in a state in which this argon gas atmosphere at 3,000 Pa was maintained, 500 kg of silicon raw materials were charged in the crucible and melted, and next as the P elimination treatment the inside of the decompression chamber was decompressed to ≤ 10 Pa with a vacuum pump and maintained for 2 hours, and then the inside of the decompression chamber was returned to a 3,000 Pa argon gas atmosphere, after which the entire amount of silicon melt whose treatment was finished was discharged from the crucible and recovered. After 15 charges were finished, the temperature of the crucible was lowered in a state in which this argon gas atmosphere at 3,000 Pa was maintained, and the continuous treatment of silicon purification was concluded.

Here, in Embodiment 1 of the present invention, after the silicon melt discharge of charge 5 and charge 10 of the silicon raw materials was completed, the used thermal-insulating lid was replaced with an unused thermal-insulating lid. The atmosphere inside the decompression chamber at that time was 3,000 Pa argon.
Compared to this, in the Comparative Example, the thermal-insulating lid was not replaced.

Silicon raw materials whose initial P concentration was 10 ppmw were employed. A portion of the treated silicon that was discharged and had solidified after treatment was sampled, and the P elimination efficiency was evaluated by measuring the P concentration thereof with ICP emission spectrometry. The lower threshold of analysis of ICP emission spectrometry was 0.02 ppmw.

### Table 1 shows the P concentration after treatment of charges 1 to 15.

In Embodiment 1, over charges 1 to 5, the P concentration after treatment has became higher, and as the extent of the blockage at the exhaust opening of the thermal-insulating lid increased, the P elimination rate declined. However, the P elimination rate recovered again in charge 6 after the replacement of the thermal-insulating lid, after which the P elimination rate continued to decline again, but the P elimination rate recovered again in charge 11, when thermal-insulating lid was replaced again. As a result, for all of the charges from 1 to 15, it was possible to recover treated silicon at ≤ 0.1 ppmw, which is usable as the solar cell raw materials.

On the other hand, in the Comparative Example, as the number of charges increased, the P elimination rate declined, and the blockage of the exhaust opening of the thermal-insulating lid impeded P elimination. Moreover, the blockage of the exhaust opening of the thermal-insulating lid progressed markedly up to charge 10, and it reached the point where the exhaust opening was totally covered by the deposited solid, and it become impossible to charge the raw materials for charge 11 from the opening and the continuous treatment of silicon purification was suspended.

### (Embodiment 2)

The basic structure of the device that was used is in conformity with Figure 5, and other than the fact that the replacement mechanism of the thermal-insulating lid differs from Embodiment 1, and it is the same apparatus as Embodiment 1, including the raw materials charging mechanism and melt discharge mechanism (not illustrated in the figures). In addition, as concerns the steps of continuous treatment of silicon purification, it was implemented by the same steps as Embodiment 1 except for the point that the replacement of the thermal-insulating lids was implemented each time that each charge was concluded.

Table 1 shows the P concentration after treatment of charges 1 to 15. As a result, for all of the charges from 1 to 15, it was possible to recover treated silicon with a P concentration that falls under ≤ 0.2 ppmw, which is the lower threshold of analysis of ICP emission spectrometry.

### (Embodiment 3)

Other than the fact that the pressure inside the decompression chamber in P elimination treatment was set at 550 Pa, it was implemented in conformity with Embodiment 2.

Table 1 shows the P concentration after treatment of charges 1 to 15. As a result, for all of the charges from 1 to 15, it was possible to recover treated silicon at ≤ 0.1 ppmw, which is usable as the solar cell raw materials, but since the pressure was high, the attained P concentration was high compared to Embodiment 2, and the efficiency of P elimination declined.

### (Embodiment 4)

Other than the fact that the inside of the decompression chamber during the time of replacement of the thermal-insulating lid was set as a decompression state at ≤ 10 Pa, it was implemented in the same manner as Embodiment 2, including the point that the replacement of the thermal-insulating lids was implemented each time that each charge was concluded.

Table 1 shows the P concentration after treatment of charges 1 to 15. As a result, for the charges from 1 to 13, it was possible to recover treated silicon at ≤ 0.1 ppmw, which is usable as the solar cell raw materials, but because the decompressed state was maintained during decompression, solids of Si and Si compounds were deposited on the thermal-insulating lid on the first layer, and the blockage of the opening progressed abruptly from charge 14 on, and the achieved P concentration did not become ≤ 0.1 ppmw.

**[Table 1]**

| (P concentration analysis value, unit: ppmw) | | | | | |
|---|---|---|---|---|---|
| Charge No. | Comparative Example | Embodiment 1 | Embodiment 2 | Embodiment 3 | Embodiment 4 |
| 1 | <0.02 | <0.02 | <0.02 | 0.04 | <0.02 |
| 2 | <0.02 | <0.02 | <0.02 | 0.06 | <0.02 |
| 3 | 0.03 | 0.04 | <0.02 | 0.04 | <0.02 |
| 4 | 0.04 | 0.07 | <0.02 | 0.07 | <0.02 |
| 5 | 0.09 | 0.09 | <0.02 | 0.05 | <0.02 |
| 6 | 0.15 | <0.02 | <0.02 | 0.04 | <0.02 |
| 7 | 0.31 | <0.02 | <0.02 | 0.05 | <0.02 |
| 8 | 0.52 | 0.03 | <0.02 | 0.06 | <0.02 |
| 9 | 1.03 | 0.04 | <0.02 | 0.08 | <0.02 |
| 10 | 2.56 | 0.07 | <0.02 | 0.06 | <0.02 |
| 11 | - | <0.02 | <0.02 | 0.07 | 0.03 |
| 12 | - | <0.02 | <0.02 | 0.05 | 0.05 |
| 13 | - | 0.05 | <0.02 | 0.09 | 0.09 |
| 14 | - | 0.06 | <0.02 | 0.05 | 0.12 |
| 15 | - | 0.08 | <0.02 | 0.07 | 0.19 |

### Key

| | |
|---|---|
| 1, 1a, 1b | Vacuum pump, vacuum pump |
| 2 | Decompression chamber, |
| 2a | Treatment chamber |
| 2b | Spare exhaust chamber |
| 3 | Silicon melt |
| 4 | Graphite crucible |
| 5 | Heating apparatus |
| 6 | Peripheral thermal-insulating member |
| 6a | Central opening |
| 7, 7₁, 7₂, 7₃ | Ring-shaped thermal-insulating lid |
| 7a | Exhaust opening |
| 8 | Solids of Si and Si compounds |
| 9 | Storage place |
| A₁, A₂ | Area |
| 10 | Gate valve |
| 11 | Lifting apparatus |
| 12 | Door |
| 13 | Ring-shaped thermal-insulating member |
| 13a | Exhaust opening |

## Claims

1. A silicon purification apparatus that is equipped with a graphite crucible at the upper end opening for accommodating the silicon and a heating apparatus for heating said crucible inside a decompression chamber that is equipped with a vacuum pump, **characterized in that** said apparatus is equipped with a ring-shaped thermal-insulating lid that covers the opening of said crucible at the upper part of the above-mentioned crucible, and that in addition has an exhaust opening whose area is smaller than the silicon melt surface inside the crucible, and said heat-insulating lid can be replaced during the heating of the above-mentioned crucible inside the above-mentioned decompression chamber.

2. The silicon purification apparatus described in Claim 1 above, **characterized in that** the above-mentioned ring-shaped thermal-insulating lid covers the peripheral portion of the opening of said crucible, in the upper part of the above-mentioned crucible, and in addition covers the opening of said crucible, through a ring-shaped peripheral heat-insulating member that has a central opening with an area smaller than the silicon melt surface inside the crucible.

3. The silicon purification apparatus described in Claim 1 or 2 above, wherein the above-mentioned decompression chamber is equipped with a preparation chamber that accommodates a replaceable thermal-insulating lid through a gate valve.

4. A silicon purification method that employs the silicon purification apparatus described in any one of Claims 1 to 3 above, and that eliminates the impurities that evaporate from within the silicon melt while heating the silicon in the crucible to the melting point or above, **characterized in that** at least 2 charges of silicon purification treatment are conducted while the heating of the crucible is continued, by exchanging at least one time the replaceable thermal-insulating lid.

5. The silicon purification method described in Claim 4 above, **characterized in that** the pressure inside the decompression chamber during the above-mentioned silicon purification treatment is ≤ 500 Pa.

6. The silicon purification method described in Claims 4 or 5 above, **characterized in that** the pressure inside the decompression chamber during the replacement of the above-mentioned replaceable thermal-insulating lid is greater than 500 Pa.
